# EUROPÄISCHE PATENTSCHRIFT

(11) **EP 2 686 545 B1**
(45) Veröffentlichungstag und Bekanntmachung des Hinweises auf die Patenterteilung: **10.05.2017**
(21) Anmeldenummer: 12709840.8
(22) Anmeldetag: 14.03.2012
(51) Int. Cl.: F03D 1/00

(54) **TRANSPORTGESTELL FÜR DEN TRIEBSTRANG EINER WINDENERGIEANLAGE**
TRANSPORTATION FRAME FOR THE DRIVE TRAIN OF A WIND TURBINE SYSTEM
CHÂSSIS DE TRANSPORT POUR LA CHAÎNE DE TRANSMISSION D'UNE ÉOLIENNE

(30) Priorität: 14.03.2011 DE 102011013844
(43) Veröffentlichungstag der Anmeldung: 22.01.2014
(73) Patentinhaber: Senvion GmbH, 22297 Hamburg (DE)
(72) Erfinder: SCHULZ, Birger, 24986 Satrup (DE); LÜTJEN, Jan, 25585 Lütjenweststedt (DE); GAEDE, Stefan, 24109 Kiel (DE)
(74) Vertreter: Glawe, Delfs, Moll
(86) Internationale Anmeldenummer: PCT/EP2012/054435
(87) Internationale Veröffentlichungsnummer: WO 2012/123480

(56) Entgegenhaltungen:
- EP-A2- 1 251 306
- WO-A2-2007/093854
- DE-A1-102007 009 575

## Beschreibung

Die Erfindung betrifft ein Transportgestell für einen ein Getriebe und eine Rotorwelle umfassenden Triebstrang einer Windenergieanlage. Das Transportgestell ist mit einem Getriebeträger für das Getriebe des Triebstrangs und mit einem Rotorwellenträger für die Rotorwelle des Triebstrangs ausgerüstet.

Triebstränge heutiger Windenergieanlage sind aufgrund ihrer Größe und ihres Gewichts nur schwierig zu transportieren. Betrachtet man aktuelle Windenergieanlagen mit einer Nennleistung zwischen 3 MW und 4 MW, so hat der Triebstrang bei einem Gewicht von ungefähr 50 t eine Länge von mehr als 6 m und eine Breite von mehr als 3 m. Da mit dieser Breite die für normale Lkw zulässige Breite überschritten ist, ist ein Transport auf der Straße nur als Sondertransport möglich. Die bislang gängigen Transportgestelle entsprechen in ihren Abmessungen dem Triebstrang. Selbst ohne den Triebstrang passen sie folglich nicht auf einen normalen LKW, so dass auch der Rücktransport - nachdem der Triebstrang abgeladen worden ist - im Rahmen eines Sondertransports erfolgen muss. Dokument DE 10 2007 009 575 offenbart einen Grundkörper welcher gleichzeitig Transportrahmen für das Getriebe ist, der Grundkörper wird fest in der Windenergieanlage montiert und muss somit nicht rücktransportiert werden. Der Erfindung liegt die Aufgabe zu Grunde, ein Transportgestell vorzustellen, das flexibel und einfach verwendet werden kann. Ausgehend vom eingangs genannten Stand der Technik wird die Aufgabe gelöst mit den Merkmalen des Anspruchs 1. Vorteilhafte Ausführungsformen finden sich in den Unteransprüchen.

Erfindungsgemäß umfasst das Transportgestell ein erstes Gestellteil und ein zweites Gestellteil. Für das Transportgestell ist ein Nutzzustand und ein Transportzustand vorgesehen. Im Nutzzustand sind der Rotorwellenträger und der Getriebeträger mit dem ersten Gestellteil und/oder mit dem zweiten Gestellteil verbunden. Im Nutzzustand sind das erste Gestellteil und das zweite Gestellteil nebeneinander angeordnet. Im Transportzustand sind das erste Gestellteil und das zweite Gestellteil übereinander angeordnet.

Zunächst werden einige Begriffe erläutert. Der Getriebeträger und der Rotorwellenträger dienen dazu, die Gewichtskraft von dem auf dem Transportgestell aufliegenden Triebstrang in das Transportgestell überzuleiten. Für die Träger sind unterschiedliche Gestaltungen möglich, sie können beispielsweise als einfache Abstützfläche geformt sein, auf denen der Triebstrang aufliegt. Möglich sind auch Aufnahmen, an denen der Triebstrang auf geeignete Weise befestigt werden kann. Der auf dem Transportgestell zu transportierende Triebstrang umfasst mindestens das Getriebe und die Rotorwelle. Möglich ist, dass der Triebstrang zusätzlich den Generator umfasst.

Wenn das erste Gestellteil und das zweite Gestellteil nebeneinander angeordnet sind, so bezieht sich dies auf die Fläche unter dem Triebstrang, auf dem das Transportgestell im Nutzzustand steht. Übereinander angeordnet sind die Gestellteile im Transportzustand, wenn ausgehend vom Nutzzustand ein Gestellteil seine Position beibehält und das andere Gestellteil darauf abgelegt wird. Dabei kann das andere Gestellteil seine ursprüngliche Ausrichtung beibehalten, zwingend erforderlich ist dies aber nicht. Mit dem Begriff "übereinander" ist keine Beschränkung dahingehend verbunden, in welcher Ausrichtung die Gestellteile im Transportzustand tatsächliche transportiert werden. So ist es beispielsweise ohne weiteres möglich, Gestellteile, die im Nutzzustand waagerecht ausgerichtet sind, im Transportzustand senkrecht zu transportieren. Auch die Begriffe "vorne" und "hinten" enthalten in Bezug auf den Transportzustand keine Beschränkung. Dass ein Transportzustand für das Transportgestell vorgesehen ist, besagt lediglich, dass es möglich ist, das Gestell für den Transport in den betreffenden Zustand zu bringen. Es ist nicht ausgeschlossen, dass das Transportgestell auch in anderen Zuständen transportiert werden kann.

Mit der Erfindung wird ein Transportgestell vorgestellt, das im Nutzzustand den großen und schweren Triebstrang aufnehmen kann und das im Transportzustand leicht transportiert werden kann.

Es sind verschiedene Ausgestaltungen des ersten und zweiten Gestellteils denkbar. So können das erste Gestellteil und das zweite Gestellteil im Nutzzustand bezogen auf die Längsrichtung des Triebstrangs seitlich nebeneinander angeordnet sein. Im Nutzzustand können der Rotorwellenträger und/oder der Getriebeträger sowohl mit dem ersten als auch mit dem zweiten Gestellteil verbunden sein. Möglich ist auch ein zentrales Gestellteil, das den Rotorwellenträger und den Getriebeträger alleine aufnimmt und an das sich in seitlicher Richtung weitere Gestellteile anschließen.

In einer vorteilhaften Ausführungsform sind im Nutzzustand das erste Gestellteil und das zweite Gestellteil in Längsrichtung des Triebstrangs hintereinander angeordnet, so dass ein Gestellteil vorne und ein Gestellteil hinten angeordnet ist. Die Angaben vorne und hinten beziehen sich auf den Triebstrang, wobei das Getriebe hinten und die Rotorwelle vorne angeordnet ist. Im Nutzzustand kann der Rotorwellenträger mit dem vorne angeordneten Gestellteil und der Getriebeträger mit dem hinten angeordneten Gestellteil verbunden sein.

Wenn von der Länge des Transportgestells gesprochen wird, bezieht sich dies auf die Längsrichtung des Triebstrangs, also die Richtung, in der sich die Rotorwelle erstreckt. Im Transportzustand kann die Länge des Transportgestells kleiner sein als die Breite. Da bei einem Transport im Allgemeinen eher die Breite als die Länge die kritische Dimension ist, ergibt sich in diesem Fall aus der Länge des Transportgestells, wie breit der Transporter mindestens sein muss.

In der Ausführungsform, in der das erste Gestellteil und das zweite Gestellteil hintereinander angeordnet sind, baut die Erfindung auf der Erkenntnis auf, dass der Triebstrang eine sehr ungleichmäßig verteilte Last auf das Transportgestell ausübt. Der größte Teil der Last entfällt auf das Getriebe, während die Rotorwelle vergleichsweise leicht ist. Andererseits nimmt die Rotorwelle einen großen Teil der Länge des Triebstrangs ein, während das Getriebe im Vergleich kurz ist. Der größte Teil der Last wird also von einem Flächenabschnitt aufgenommen, der nicht im Zentrum des Transportgestells liegt, sondern nach hinten verlagert ist.

Die Erfindung hat erkannt, dass es vor diesem Hintergrund möglich ist, das Transportgestell in Längsrichtung aus zwei Teilen zusammenzusetzen. Es wird dadurch möglich, das Transportgestell in der ursprünglich längeren Dimension so zu verkürzen, dass die Abmessungen für einen Standardtransport eingehalten werden.

Im Nutzzustand sind das erste Gestellteil und das zweite Gestellteil vorzugsweise so stabil miteinander verbunden, dass an dem Transportgestell angegriffen werden kann, um das Transportgestell mitsamt dem Antriebsstrang anzuheben und zu manövrieren. Eine in diesem Sinne stabile Verbindung kann beispielsweise erreicht werden, indem das erste Gestellteil und das zweite Gestellteil mit sechs M30-Bolzen verschraubt werden.

Wenn das Transportgestell im Nutzzustand mehr als doppelt so lang ist wie die für den Transportzustand angestrebte Länge, reicht es nicht aus, das Transportgestell in das erste (vordere) Gestellteil und das zweite (hintere) Gestellteil zu zerlegen. Denkbar wäre es, das Transportgestell in Längsrichtung in noch mehr Teile zu zerlegen. Allerdings wäre dies umständlich. In einer vorteilhaften Ausführungsform sind deswegen eines oder mehrere Klappsegmente am ersten Gestellteil bzw. zweiten Gestellteil vorgesehen. Ein Klappsegment bezeichnet ein Segment, das schwenkbar mit dem ersten bzw. zweiten Gestellteil verbunden ist, so dass es im ausgeklappten Zustand das erste bzw. zweite Gestellteil in Längsrichtung verlängert und dass im eingeklappten Zustand das Klappsegment und das erste bzw. zweite Gestellteil übereinander liegen. Für den Nutzzustand des Transportgestells werden die Klappsegmente ausgeklappt, für den Transportzustand werden die Klappsegmente eingeklappt. Die Klappsegmente können sich über die gesamte Breite des ersten Gestellteils des bzw. des zweiten Gestellteils erstrecken. Im ausgeklappten Zustand können die Klappsegmente beispielsweise mittels Bolzen und Splinten gesichert sein. Die Sicherung bietet vorzugsweise eine vergleichbare Stabilität wie die Verbindung zwischen dem ersten Gestellteil und dem zweiten Gestellteil.

Das erste (vordere) Gestellteil kann an seinem hinteren Ende mit einem Klappsegment versehen sein. Die Länge des Klappsegments ist vorzugsweise kleiner als der Abstand zwischen dem vorderen Ende des Klappsegments und dem Träger für die Rotorwelle. Das Klappsegment kann dann eingeklappt werden, ohne mit dem Rotorwellenträger zu kollidieren. Wenn mit Bezug auf die Klappsegmente von vorderem und hinterem Ende gesprochen wird, bezieht sich dies auf den ausgeklappten Zustand.

Das zweite (hintere) Gestellteil kann ein erstes Klappsegment an seinem vorderen Ende und ein zweites Klappsegment an seinem hinteren Ende aufweisen. Die Länge des ersten Klappsegments ist vorzugsweise kleiner als der Abstand zwischen den hinteren Ende des Klappsegments und dem Getriebeträger. Die Länge des zweiten Klappsegments ist vorzugsweise kleiner als der Abstand zwischen dem vorderen Ende des zweiten Klappsegments und dem Getriebeträger. Das erste und das zweite Klappsegment können dann eingeklappt werden, ohne mit dem Getriebeträger zu kollidieren. Für eine gute Gewichtsverteilung ist es vorteilhaft, wenn die Länge des zweiten Klappsegments um mindestens 30 %, vorzugsweise um mindestens 50 % größer ist als die Länge des ersten Klappsegments.

In einer Ausführungsform erstreckt sich das Transportgestell im Nutzzustand über eine Länge von mehr als 4, vorzugsweise mehr als 6 m und eine Breite von mehr als 2,55 m, vorzugsweise mehr als 3 m. Im Transportzustand reduziert sich die Länge auf weniger als 2,6 m, während die Breite unverändert bleiben kann. Wenn die Länge im Transportzustand geringer ist als 2,3 m, kann das Transportgestell sogar in einem Standardcontainer transportiert werden.

Im Transportzustand kann das zweite Gestellteil auf dem ersten Gestellteil angeordnet sein. Umgekehrt kann auch das erste Gestellteil auf dem zweiten Gestellteil angeordnet sein. Um das erste (vordere) Gestellteil auf dem zweiten (hinteren) Gestellteil ablegen zu können, ist es vorteilhaft, wenn das zweite Gestellteil an seiner Oberseite Flächenbereiche aufweist, auf denen das erste Gestellteil direkt abgesetzt werden kann. Solche Flächenbereiche können beispielsweise von dem ersten und dem zweiten Klappsegment im eingeklappten Zustand gebildet werden. Weiter vorteilhaft ist es, wenn das zweite Gestellteil keine Elemente aufweist, die nach oben über diese Flächenbereiche hinausragen. Insbesondere kann der Getriebeträger so flach gestaltet sein, dass er diese Bedingung erfüllt. Alternativ kann auch vorgesehen sein, dass Getriebeträger im Transportzustand von dem zweiten Getriebeteil getrennt wird.

Der Getriebeträger kann so gestaltet sein, dass er an den Lagerböcken angreift, über die der Triebstrang in der Windenergieanlage gelagert wird. Dies kann allerdings den Nachteil haben, dass die Kräfte sehr weit außen in das Transportgestell eingeleitet werden, so dass das Transportgestell unter Umständen einer starken Biegebelastung ausgesetzt wird. Von Vorteil kann es deswegen sein, wenn die Abstützfläche direkt das Getriebegehäuse abstützt. Dadurch kann die Gewichtskraft des Getriebes zentral in das Transportgestell eingeleitet werden und eine übermäßige Biegebelastung in Querrichtung auf das Transportgestell wird vermieden.

Der Getriebeträger ist vorzugsweise so gestaltet, dass das Getriebe vor beim Transport auftretenden Vibrationen und Stößen geschützt ist. Dazu kann die Abstützfläche, auf der das Getriebegehäuse direkt aufliegt, mit einem vibrationsdämpfenden Element wie beispielsweise einem Elastomerbelag versehen sein. Zusätzlich oder alternativ dazu können auch für die Verbindung zwischen dem Getriebeträger und dem betreffenden Gestellteil des Transportgestells geeignete vibrationsdämpfende Lagerböcke vorgesehen sein.

Damit das Transportgestell im Transportzustand nur wenig Höhe beansprucht, kann zudem vorgesehen sein, dass der Rotorwellenträger von dem betreffenden Gestellteil getrennt wird. Möglich ist auch ein Klappmechanismus, mit dem der Träger so eingeklappt werden kann, dass er flach auf dem Gestellteil liegt. Der Rotorwellenträger kann vibrationsgedämpft ausgeführt sein.

Das Transportgestell kann im Nutzzustand einen umlaufenden Rand haben, innerhalb dessen es eine oder mehrere Vertiefungen gibt. Das Transportgestell kann dann zugleich als Ölwanne wirken, bei der sich eventuell austretendes Öl in den Vertiefungen sammelt. Die Bodenfläche innerhalb des Rahmens ist vorzugsweise so abgedichtet, dass kein Öl nach unten austreten kann. Um die Befestigung des Transportgestells an einem Transporter zu erleichtern, können in der Bodenfläche zudem eine oder mehrere Serviceöffnungen vorgesehen sein. Wenn die Serviceöffnung geöffnet ist, ist der unter dem Transportgestell liegende Bereich zugänglich, so dass das Transportgestell dort beispielsweise angeschraubt oder festgeschweißt werden kann. Im geschlossenen Zustand ist vorzugsweise auch die Serviceöffnung so abgedichtet, dass kein Öl austreten kann.

In einer vorteilhaften Ausführungsform ist das Transportgestell so ausgelegt, dass es auch für eine längerfristige Lagerung des Triebstrangs geeignet ist. Dazu muss einerseits sichergestellt sein, dass der Triebstrang vor Witterungseinflüssen geschützt ist. Andererseits muss der Triebstrang für Servicetechniker zugänglich bleiben, da bei einer längerfristigen Lagerung regelmäßig Wartungsarbeiten durchgeführt werden müssen. So muss etwa in regelmäßigen Abständen die Rotorwelle etwas gedreht werden.

Für das Transportgestell kann also eine Einhausung vorgesehen sein, die im Nutzzustand mit dem ersten Gestellteil und dem zweiten Gestellteil verbunden werden kann, so dass sie den Triebstrang nach oben und zu den Seiten hin abdeckt, und die im Transportzustand von dem ersten Gestellteil und dem zweiten Gestellteil getrennt ist. Die Einhausung kann eine Plane als Abdeckung aufweisen. Von Vorteil ist es aber, wenn die Einhausung aus einem formfesten Material wie beispielsweise GFK besteht. In einer vorteilhaften Ausführungsform wird die Einhausung aus mehreren Formteilen zusammengesetzt, die für sich genommen jeweils nicht größer sind als das erste Gestellteil bzw. das zweite Gestellteil des Transportgestells. Es können beispielsweise für jede der Stirnflächen zwei Formteile, für jede der Seitenflächen zwei Formteile für den unteren Bereich und für jede der Seitenflächen zwei Formteile für den oberen Bereich vorgesehen sein. Die Formteile für den oberen Bereich der Seitenwände können zugleich Dachabschnitte umfassen. Die Formteile können beispielsweise über Steckverbindungen und/oder Schraubverbindungen miteinander sowie mit dem ersten Gestellteil und dem zweiten Gestellteil verbunden werden. Um dem Servicetechniker einen Zugang zu ermöglichen, kann die Einhausung mit einer Eingangsöffnung versehen sein, die beispielsweise an der hinteren Stirnseite angeordnet sein kann.

Damit das Transportgestell beim Verladen und ähnlichen Gelegenheiten gut manövriert werden kann, ist es vorzugsweise so ausgelegt, dass es wahlweise mit einem Kran oder mit einem Gabelstapler angehoben werden kann. Mit dem Gabelstapler wird das Transportgestell in erster Linie angehoben, wenn der Triebstrang nicht auf dem Transportgestell angeordnet ist. Das erste Gestellteil und/oder das zweite Gestellteil können mit Gabelstaplertaschen ausgerüstet sein.

Für das Anheben des Transportgestells mit einem Kran ist vorzugsweise eine Mehrzahl von Hebeösen vorgesehen, die in geeigneten Positionen an dem Transportgestell angebracht sind. Das erste Gestellteil und das zweite Gestellteil können jeweils mit einer Mehrzahl von Hebeösen ausgestattet sein. Die Einhausung kann im Dachbereich eine oder mehrere verschließbare Zugangsöffnungen aufweisen, durch die im geöffneten Zustand eine Verbindung von dem Kran zu den Hebeösen hergestellt werden kann.

Die Erfindung wird nachfolgend unter Bezugnahme auf die beigefügten Zeichnungen anhand einer vorteilhaften Ausführungsform beispielhaft beschrieben. Es zeigen:
- Fig. 1:: ein erfindungsgemäßes Transportgestell mit einem Triebstrang;
- Fig. 2:: das Transportgestell aus Fig. 1 mit Einhausung;
- Fig. 3:: das Transportgestell aus Fig. 2 in einer anderen Darstellungsform und aus einer anderen Perspektive;
- Fig. 4:: das erfindungsgemäße Transportgestell im Nutzzustand;
- Fig. 5 und 6:: das Transportgestell aus Fig. 4 in Zwischenzuständen zwischen dem Nutzzustand und dem Transportzustand; und
- Fig. 7:: das Transportgestell aus Fig. 4 im Transportzustand.

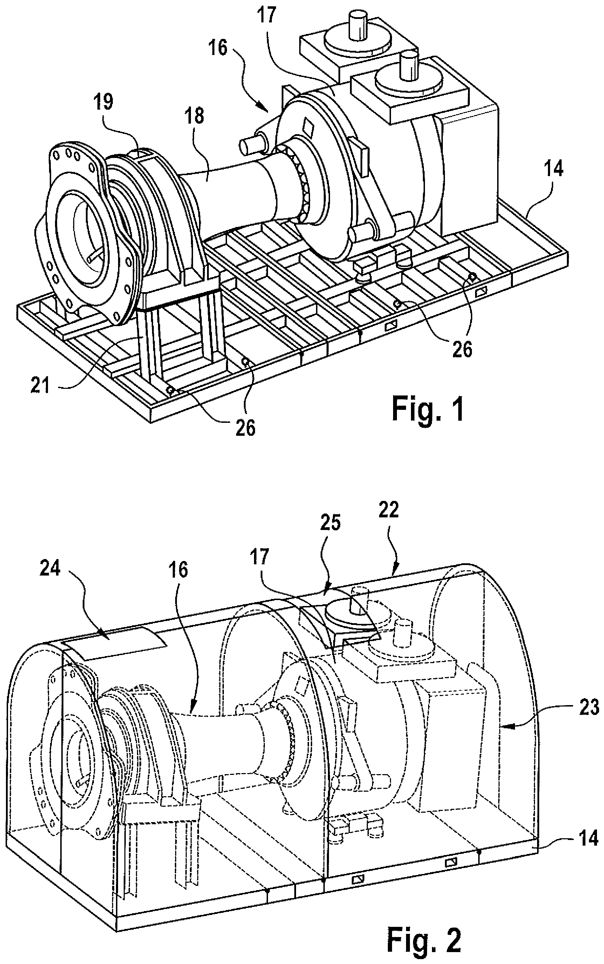

Ein erfindungsgemäßes Transportgestell in Fig. 1 umfasst einen sich ringsherum erstreckenden Rahmen 14 mit einer Länge von 6,2 m und einer Breite von 3,25 m. Zur Stabilisierung des Transportgestells erstreckt sich innerhalb des Rahmens 14 eine Mehrzahl von Verstrebungen in Querrichtung und in Längsrichtung. Die gesamte von dem Rahmen 14 eingeschlossene Fläche ist mit einer Bodenplatte nach unten abgedichtet, so dass auf der Bodenplatte gesammeltes Öl nicht nach unten auslaufen kann. Vielmehr sammelt sich das Öl in Vertiefungen zwischen den Verstrebungen. In der Bodenplatte gibt es eine Mehrzahl von verschließbaren Serviceöffnungen. Die Serviceöffnungen werden genutzt, um das Transportgestell beim Verladen an einer darunter liegenden Struktur zu befestigen.

Auf dem Transportgestell gelagert ist ein Triebstrang 16, der ein Getriebe 17 und eine sich nach vorne erstreckende Rotorwelle 18 umfasst. Die Rotorwelle 18 ist in einem Lager 19 gelagert und an ihrem vorderen Ende mit einem Flansch versehen, an dem die Nabe eines Rotors angeschlossen werden kann.

Das Transportgestell umfasst einen Getriebeträger in Form einer Abstützfläche 15, deren nach oben weisende Kontur an die runde Außenform des Getriebes angepasst ist. Auf der Abstützfläche 15 ist eine Mehrzahl von Elastomerelementen angeordnet, auf denen das Getriebe 17 mit seinem Getriebegehäuse, das zugleich das Hohlrad eines Planetengetriebes bildet, ruht. Die Abstützfläche 15 wiederum stützt sich über vier vibrationsdämpfende Lagerböcke 20 auf den Verstrebungen des Transportgestells ab. Das Transportgestell umfasst außerdem zwei Rotorwellenträger 21, auf denen das Lager 19 der Rotorwelle 18 festgeschraubt ist.

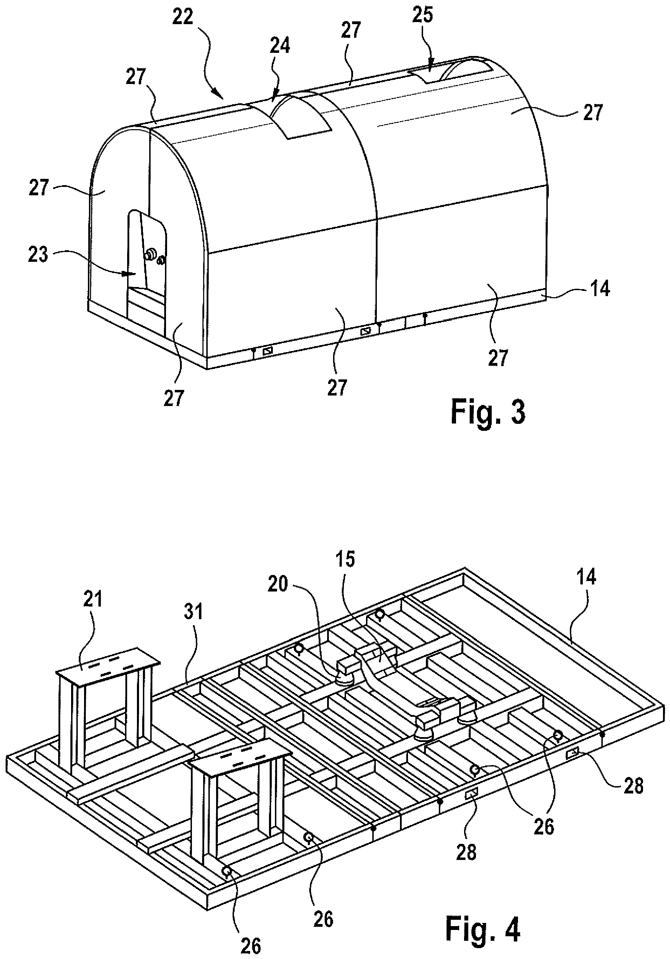

Gemäß den Figuren 2 und 3 umfasst das Transportgestell eine Einhausung 22, die den Triebstrang 16 nach oben und zu den Seiten hin umgibt und vor Witterungseinflüssen schützt. Am hinteren Ende des Transportgestells ist die Einhausung mit einer Eingangsöffnung 23 versehen, durch die ein Servicetechniker in das Innere der Einhausung 22 eintreten kann. Wenn der Triebstrang 16 in diesem Zustand länger gelagert wird, ist es für den Servicetechniker auf diesem Wege möglich, die erforderlichen Wartungsarbeiten durchzuführen.

In ihrem Dach ist die Einhausung 22 mit zwei Zugangsöffnungen 24, 25 versehen, die jeweils mit einem Deckel verschließbar sind. Durch die Öffnungen 24, 25 hindurch kann eine Verbindung zwischen Hebeösen 26, die an dem Rahmen 14 des Transportgestells angeordnet sind, und einem Kran hergestellt werden. Das Transportgestell mit dem darauf angeordneten Triebstrang 16 kann also mit einem Kran angehoben werden, ohne dass die Einhausung 22 entfernt werden müsste.

Wenn kein Triebstrang auf dem Transportgestell gelagert ist, kann das Transportgestell auch mit einem Gabelstapler angehoben werden. Es sind dazu im hinteren Bereich des Transportgestells zwei Gabelstaplertaschen 28 vorgesehen.

Die Einhausung 22 besteht gemäß Fig. 3 aus insgesamt zwölf Formteilen 27. Die Stirnwände sind jeweils aus zwei Formteilen 27 zusammengesetzt. Auf jeder Seite bilden zwei Formteile 27 den unteren Bereich der Seitenwände. Schließlich gibt es auf jeder Seite zwei weitere Formteile 27, die den oberen Bereich der Seitenwände bilden und die nach oben kuppelförmig in das Dach übergehen. Die größten Formteile haben eine Länge von ungefähr 3 m und eine Höhe und Breite von weniger als 2 m, so dass sie ohne weiteres in einem Standardcontainer oder auf einem LKW transportiert werden können. Die Verbindung der Formteile 27 untereinander wird durch Steckverbindungen hergestellt, mit dem Rahmen 14 sind die Formteile 27 verschraubt.

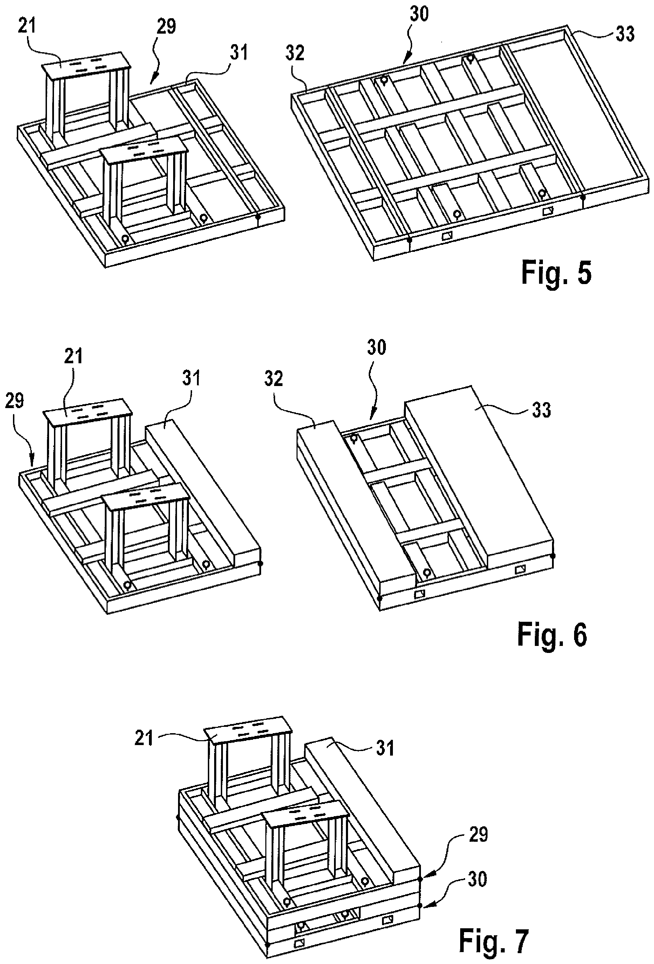

In Fig. 4 ist das Transportgestell im Nutzzustand, aber ohne den Triebstrang 16 gezeigt. In diesem Zustand kann der Triebstrang 16 von oben auf das Transportgestell aufgesetzt werden, wobei das Getriebe 17 dann auf der Abstützfläche 15 und das Lager 19 der Rotorwelle 18 auf den Rotorwellenträgern 21 zu liegen kommt. Das Transportgestell hat im Nutzzustand eine Länge von 6,2 m und eine Breite von 3,25 m, so dass es weder in einem Standardcontainer noch auf einem Standard-LKW transportiert werden kann. Für den Transport wird das Transportgestell deswegen in einen in Fig. 7 gezeigten Transportzustand gebracht. Im Transportzustand hat das Transportgestell weiterhin eine Breite von 3,25 m, jedoch eine Länge von nur noch 2,2 m. Diese Länge ist kleiner als die Breite eines Standardcontainers und die Breite eines Standard-LKWs, so dass der Transport unproblematisch ist.

Um das Transportgestell vom Nutzzustand in den Transportzustand zu bringen wird gemäß Fig. 5 zunächst ein erstes Gestellteil 29 des Transportgestells, das hier ein Vorderteil ist, von einem zweiten Gestellteil 30, das hier ein Hinterteil ist, getrennt. Es werden dazu sechs M30-Bolzen gelöst, über die das Vorderteil 29 und das Hinterteil 30 verschraubt sind. Anschließend wird ein am hinteren Ende des Vorderteils 29 angebrachtes Klappsegment 31 entriegelt und um 180° eingeklappt, so dass es auf dem Vorderteil 29 zu liegen kommt. Die Länge des Vorteils reduziert sich dadurch auf 2,2 m.

Das Hinterteil 30 ist an seinem vorderen Ende mit einem ersten Klappsegment 32 und an seinem hinteren Ende mit einem zweiten Klappsegment 33 versehen, wobei das zweite Klappsegment 33 eine größere Länge hat als das erste Klappsegment 32. Wenn beide Klappsegmente 32, 33 eingeklappt sind, reduziert sich auch die Länge des Hinterteils 30 des Transportgestells auf 2,2 m. Die Klappsegmente 32, 33 bilden dann eine ebene Fläche auf der Oberseite des Hinterteils 30, über die allerdings die Abstützfläche 15 für das Getriebe 17 noch hinausragt. Die Abstützfläche 15 wird deswegen von dem Hinterteil 30 entfernt. Der Zustand des Hinterteils 30, in dem beide Klappsegmente 32, 33 eingeklappt sind und in dem die Abstützfläche 15 entfernt ist, ist in Fig. 6 gezeigt.

Zum Schluss kann nun das Vorderteil 29 auf dem Hinterteil 30 abgesetzt werden. Es entsteht gemäß Fig. 7 eine kompakte Einheit, die zwar noch die ursprüngliche Breite hat, jedoch nur noch 2,2 m lang ist. Bei Bedarf kann auch noch die Höhe reduziert werden, indem die Rotorwellenträger 21 umgelegt werden. Sowohl in einem Standardcontainer als auch in einem Standard-Lkw kann eine solche kompakte Einheit ohne weiteres transportiert werden. Insbesondere passt das Transportgestell in diesem Zustand zusammen mit allen Formteilen 27 der Einhausung 22 in einen 20-Fuß-Standardcontainer.

## Patentansprüche

1. Transportgestell für den Triebstrang (16) einer Windenergieanlage, der ein Getriebe (17) und eine Rotorwelle (18) umfasst, mit einem Getriebeträger (15) für das Getriebe (17) und mit einem Rotorwellenträger (21) für die Rotorwelle (18), **dadurch gekennzeichnet, dass** das Transportgestell ein erstes Gestellteil (29) und ein zweites Gestellteil (30) umfasst, dass für das Transportgestell ein Nutzzustand und ein Transportzustand vorgesehen ist, dass im Nutzzustand der Rotorwellenträger (21) und der Getriebeträger (15) mit dem ersten Gestellteil (29) und/oder mit dem zweiten Gestellteil (30) verbunden sind, dass im Nutzzustand das erste Gestellteil (29) und das zweite Gestellteil (30) nebeneinander angeordnet sind und dass im Transportzustand das erste Gestellteil (29) und das zweite Gestellteil (30) übereinander angeordnet sind.

2. Transportgestell nach Anspruch 1, **dadurch gekennzeichnet, dass** im Nutzzustand der Rotorwellenträger (21) mit dem ersten Gestellteil (29) und der Getriebeträger (15) mit dem zweiten Gestellteil (30) verbunden ist und dass im Nutzzustand das erste Gestellteil (29) und das zweite Gestellteil (30) in Längsrichtung des Triebstrangs (16) hintereinander angeordnet sind.

3. Transportgestell nach Anspruch 1 oder 2, **dadurch gekennzeichnet, dass** das erste Gestellteil (29) und das zweite Gestellteil (30) im Nutzzustand stabil miteinander verbunden sind.

4. Transportgestell nach einem der Ansprüche 1 bis 3, **dadurch gekennzeichnet, dass** das erste Gestellteil (29) und/oder das zweite Gestellteil (30) ein Klappsegment (31, 32, 33) aufweisen.

5. Transportgestell nach Anspruch 4, **dadurch gekennzeichnet, dass** das erste Gestellteil (29) an seinem hinteren Ende ein Klappsegment (31) aufweist.

6. Transportgestell nach Anspruch 4 oder 5, **dadurch gekennzeichnet, dass** das zweite Gestellteil (30) an seinem vorderen Ende ein erstes Klappsegment (32) und/oder an seinem hinteren Ende ein zweites Klappsegment (33) aufweist.

7. Transportgestell nach einem der Ansprüche 1 bis 6, **dadurch gekennzeichnet, dass** es im Nutzzustand eine Länge von mehr als 4 m, vorzugsweise mehr als 6 m und eine Breite von mehr als 2,55 m, vorzugsweise mehr als 3 m hat und dass die Länge im Transportzustand kleiner als 2,6 m, vorzugsweise kleiner als 2,3 m ist.

8. Transportgestell nach einem der Ansprüche 1 bis 7, **dadurch gekennzeichnet, dass** im Transportzustand das erste Gestellteil (29) direkt auf dem zweiten Gestellteil (30) oder das zweite Gestellteil (30) direkt auf dem ersten Gestellteil (29) liegt.

9. Transportgestell nach einem der Ansprüche 1 bis 8, **dadurch gekennzeichnet, dass** der Rotorwellenträger (21) lösbar oder beweglich an dem ersten Gestellteil (29) angebracht ist.

10. Transportgestell nach einem der Ansprüche 1 bis 9, **dadurch gekennzeichnet, dass** das Transportgestell im Nutzzustand einen umlaufenden Rahmen (14) aufweist, dass das Transportgestell innerhalb des Rahmens (14) nach unten abgedichtet ist und eine oder mehrere Vertiefungen aufweist.

11. Transportgestell nach einem der Ansprüche 1 bis 10, **dadurch gekennzeichnet, dass** das erste Gestellteil (29) und/oder das zweite Gestellteil (30) eine Serviceöffnung aufweist, die einen Zugriff auf eine unter dem Transportgestell liegende Struktur ermöglicht.

12. Transportgestell nach einem der Ansprüche 1 bis 11, **dadurch gekennzeichnet, dass** eine Einhausung (22) vorgesehen ist, die im Nutzzustand mit dem ersten Gestellteil (29) und dem zweiten Gestellteil (30) verbunden werden kann, so dass sie den Triebstrang (16) nach oben und zu den Seiten hin abdeckt, und die im Transportzustand von dem ersten Gestellteil (29) und dem zweiten Gestellteil (30) getrennt ist.

13. Transportgestell nach Anspruch 12, **dadurch gekennzeichnet, dass** die Einhausung (22) aus einer Mehrzahl von Formteilen (27) zusammengesetzt ist und dass die Formteile (27) in ihrer Länge und ihrer Breite jeweils kleiner sind als das erste Gestellteil (29) oder das zweite Gestellteil (30).

14. Transportgestell nach Anspruch 12 oder 13, **dadurch gekennzeichnet, dass** die Einhausung (22) mit Zugangsöffnungen (24, 25) versehen ist, durch die eine Verbindung zwischen einem Kran und Hebeösen (26) des Transportgestells hergestellt werden kann.

15. Transportgestell nach einem der Ansprüche 1 bis 14, **dadurch gekennzeichnet, dass** der Rotorwellenträger (21) und/oder der Getriebeträger (15) vibrationsgedämpft ausgeführt sind.

## Claims

1. Transport rack for a wind-turbine drive train (16) comprising a gear mechanism (17) and a rotor shaft (18) having a carrier (15) for the gear mechanism (17) and having a carrier (21) for the rotor shaft (18), **characterized in that** the transport rack comprises a first rack part (29) and a second rack part (30), **in that** a use state and a transportation state are provided for the transport rack, **in that**, in the use state, the rotor-shaft carrier (21) and the gear-mechanism carrier (15) are connected to the first rack part (29) and/or to the second rack part (30), **in that**, in the use state, the first rack part (29) and the second rack part (30) are arranged one beside the other and **in that**, in the transportation state, the first rack part (29) and the second rack part (30) are arranged one above the other.

2. Transport rack according to Claim 1, **characterized in that**, in the use state, the rotor-shaft carrier (21) is connected to the first rack part (29) and the gear-mechanism carrier (15) is connected to the second rack part (30), and **in that**, in the use state, the first rack part (29) and the second rack part (30) are arranged one behind the other in the longitudinal direction of the drive train (16).

3. Transport rack according to Claim 1 or 2, **characterized in that**, in the use state, the first rack part (29) and the second rack part (30) are connected to one another in a stable manner.

4. Transport rack according to one of Claims 1 to 3, **characterized in that** the first rack part (29) and/or the second rack part (30) have/has a swing-action segment (31, 32, 33).

5. Transport rack according to Claim 4, **characterized in that** the first rack part (29) has a swing-action segment (31) at its rear end.

6. Transport rack according to Claim 4 or 5, **characterized in that** the second rack part (30) has a first swing-action segment (32) at its front end and/or a second swing-action segment (33) at its rear end.

7. Transport rack according to one of Claims 1 to 6, **characterized in that**, in the use state, it has a length of more than 4 m, preferably more than 6 m, and a width of more than 2.55 m, preferably more than 3 m, and **in that**, in the transportation state, the length is smaller than 2.6 m, preferably smaller than 2.3 m.

8. Transport rack according to one of Claims 1 to 7, **characterized in that**, in the transportation state, the first rack part (29) rests directly on the second rack part (30) or the second rack part (30) rests directly on the first rack part (29).

9. Transport rack according to one of Claims 1 to 8, **characterized in that** the rotor-shaft carrier (21) is fitted in a releasable or movable manner on the first rack part (29).

10. Transport rack according to one of Claims 1 to 9, **characterized in that**, in the use state, the transport rack has a surrounding frame (14), and **in that** the transport rack is sealed in the downward direction, and has one or more depressions, within the frame (14).

11. Transport rack according to one of Claims 1 to 10, **characterized in that** the first rack part (29) and/or the second rack part (30) have/has a service opening, which allows access to a structure located beneath the transport rack.

12. Transport rack according to one of Claims 1 to 11, **characterized by** the provision of an enclosure (22) which, in the use state, can be connected to the first rack part (29) and the second rack part (30) so that it covers the drive train (16) in the upward direction and to the sides, and which, in the transportation state, is separated from the first rack part (29) and the second rack part (30).

13. Transport rack according to Claim 12, **characterized in that** the enclosure (22) is made up of a plurality of mouldings (27), and **in that** the mouldings (27) are each smaller, in terms of length and width, than the first rack part (29) or the second rack part (30).

14. Transport rack according to Claim 12 or 13, **characterized in that** the enclosure (22) is provided with access openings (24, 25), through which it is possible to establish a connection between a crane and lifting lugs (26) of the transport rack.

15. Transport rack according to one of Claims 1 to 14, **characterized in that** the rotor-shaft carrier (21) and/or the gear-mechanism carrier (15) are of vibration-damped design.

## Revendications

1. Châssis de transport pour la chaîne de transmission (16) d'une éolienne, qui comprend une transmission (17) et un arbre de rotor (18), avec un support de transmission (15) pour la transmission (17) et avec un support d'arbre de rotor (21) pour l'arbre de rotor (18), **caractérisé en ce que** le châssis de transport comprend une première partie de châssis (29) et une deuxième partie de châssis (30), **en ce que** pour le châssis de transport, un état d'utilisation et un état de transport sont prévus, **en ce que** dans l'état d'utilisation, le support d'arbre de rotor (21) et le support de transmission (15) sont raccordés à la première partie de châssis (29) et/ou à la deuxième partie de châssis (30), **en ce que** dans l'état d'utilisation, la première partie de châssis (29) et la deuxième partie de châssis (30) sont disposées l'une à côté de l'autre, et **en ce que** dans l'état de transport, la première partie de châssis (29) et la deuxième partie de châssis (30) sont disposées l'une au-dessus de l'autre.

2. Châssis de transport selon la revendication 1, **caractérisé en ce que** dans l'état d'utilisation, le support d'arbre de rotor (21) est raccordé à la première partie de châssis (29) et le support de transmission (15) est raccordé à la deuxième partie de châssis (30), et **en ce que** dans l'état d'utilisation, la première partie de châssis (29) et la deuxième partie de châssis (30) sont disposées l'une derrière l'autre dans la direction longitudinale de la chaîne de transmission (16).

3. Châssis de transport selon la revendication 1 ou 2, **caractérisé en ce que** la première partie de châssis (29) et la deuxième partie de châssis (30) sont raccordées l'une à l'autre de manière stable dans l'état d'utilisation.

4. Châssis de transport selon l'une quelconque des revendications 1 à 3, **caractérisé en ce que** la première partie de châssis (29) et/ou la deuxième partie de châssis (30) présentent un segment rabattable (31, 32, 33).

5. Châssis de transport selon la revendication 4, **caractérisé en ce que** la première partie de châssis (29) présente un segment rabattable (31) au niveau de son extrémité arrière.

6. Châssis de transport selon la revendication 4 ou 5, **caractérisé en ce que** la deuxième partie de châssis (30) présente au niveau de son extrémité avant un premier segment rabattable (32) et/ou au niveau de son extrémité arrière un deuxième segment rabattable (33).

7. Châssis de transport selon l'une quelconque des revendications 1 à 6, **caractérisé en ce qu'**il présente, dans l'état d'utilisation, une longueur supérieure à 4 m, de préférence supérieure à 6 m et une largeur supérieure à 2,55 m, de préférence supérieure à 3 m et **en ce que** la longueur dans l'état de transport est inférieure à 2,6 m, de préférence inférieure à 2,3 m.

8. Châssis de transport selon l'une quelconque des revendications 1 à 7, **caractérisé en ce que** dans l'état de transport, la première partie de châssis (29) est située directement sur la deuxième partie de châssis (30) ou la deuxième partie de châssis (30) est située directement sur la première partie de châssis (29).

9. Châssis de transport selon l'une quelconque des revendications 1 à 8, **caractérisé en ce que** le support d'arbre de rotor (21) est monté de manière amovible ou déplaçable sur la première partie de châssis (29).

10. Châssis de transport selon l'une quelconque des revendications 1 à 9, **caractérisé en ce que** le châssis de transport, dans l'état d'utilisation, présente un cadre périphérique (14), **en ce que** le châssis de transport est étanchéifié vers le bas à l'intérieur du cadre (14) et présente un ou plusieurs renfoncements.

11. Châssis de transport selon l'une quelconque des revendications 1 à 10, **caractérisé en ce que** la première partie de châssis (29) et/ou la deuxième partie de châssis (30) présentent une ouverture de service qui permet un accès à une structure située sous le châssis de transport.

12. Châssis de transport selon l'une quelconque des revendications 1 à 11, **caractérisé en ce qu'**il est prévu un boîtier (22) qui, dans l'état d'utilisation, peut être raccordé à la première partie de châssis (29) et à la deuxième partie de châssis (30), de telle sorte qu'il recouvre la chaîne de transmission (16) vers le haut et vers les côtés, et lequel est séparé, dans l'état de transport, de la première partie de châssis (29) et de la deuxième partie de châssis (30).

13. Châssis de transport selon la revendication 12, **caractérisé en ce que** le boîtier (22) se compose d'une pluralité de pièces moulées (27) et **en ce que** les pièces moulées (27) ont une longueur et une largeur à chaque fois inférieure à la première partie de châssis (29) ou à la deuxième partie de châssis (30).

14. Châssis de transport selon la revendication 12 ou 13, **caractérisé en ce que** le boîtier (22) est pourvu d'ouvertures d'accès (24, 25) par lesquelles une connexion entre une grue et un oeillet de levage (26) du châssis de transport peut être établie.

15. Châssis de transport selon l'une quelconque des revendications 1 à 14, **caractérisé en ce que** le support d'arbre de rotor (21) et/ou le support de transmission (15) sont réalisés avec un amortissement des vibrations.
